(19) Europäisches Patentamt / European Patent Office / Office européen des brevets

(11) **EP 4 478 298 A1**

(12) **EUROPEAN PATENT APPLICATION**

(43) Date of publication:
**18.12.2024 Bulletin 2024/51**

(21) Application number: **24176570.0**

(22) Date of filing: **17.05.2024**

(51) International Patent Classification (IPC):
*G06V 10/25* (2022.01)    *G06V 20/58* (2022.01)

(52) Cooperative Patent Classification (CPC):
**G06V 20/58; G06V 10/25**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.06.2023 JP 2023098529**

(71) Applicant: **Aisin Corporation**
**Aichi 448-8650 (JP)**

(72) Inventors:
• **MORI, Keisuke**
  **Kariya, 448-8650 (JP)**
• **UCHIDA, Yoshihiro**
  **Kariya, 448-8650 (JP)**
• **NAKAMURA, Shota**
  **Kariya, 448-8650 (JP)**

(74) Representative: **TBK**
**Bavariaring 4-6**
**80336 München (DE)**

(54) **OBJECT POSITION DETECTION DEVICE**

(57)    An object position detection device includes: an image acquisition unit (38) configured to acquire imaging data on a wide-angle image (50) of surrounding conditions of a vehicle cabin captured by a wide-angle camera; a region setting unit (40) configured to set, in the wide-angle image, a region of interest (52) surrounding a region where an object is regarded to be present; a candidate point setting unit (42) configured to set a plurality of candidate points (58) that are candidates for a presence position of the object on or in a vicinity of a boundary line (60) defining the region of interest; a representative point selection unit (44) configured to determine a reference point (56) at a predetermined position in the region of interest, execute distortion correction on the reference point and the candidate points, and select a representative point (62) that is regarded as a ground contact position of the object from among the candidate points after the distortion correction; a coordinate acquisition unit (46) configured to acquire three-dimensional coordinates of the representative point; and an output unit (48) configured to output position information on the ground contact position of the object based on the three-dimensional coordinates.

*FIG. 3*

24a, 36

CPU (OBJECT POSITION DETECTION UNIT)

IMAGE ACQUISITION UNIT — 38

REGION SETTING UNIT — 40

CANDIDATE POINT SETTING UNIT — 42

REPRESENTATIVE POINT SELECTION UNIT — 44

COORDINATE ACQUISITION UNIT — 46

OUTPUT UNIT — 48

14

IMAGING UNIT (WIDE-ANGLE CAMERA)

EP 4 478 298 A1

**Description**

TECHNICAL FIELD

This disclosure relates to an object position detection device.

BACKGROUND DISCUSSION

As a technique of detecting an object around a vehicle, various object position detection devices that execute object detection (such as detection of an obstacle such as a person or another vehicle) on an image captured by an in-vehicle camera have been proposed in the related art. An object position detection device is capable of detecting presence or absence of an object, detecting a distance to the object, calculating three-dimensional coordinates of the object, and acquiring a movement speed, a movement direction, and the like of the object when the object is moving, and the detection results can be used for vehicle control. Preferably, a small number of in-vehicle cameras used in such an in-vehicle object position detection device are used to acquire information (images) in a range as wide as possible, and a wide-angle camera (fisheye camera) equipped with a wide-angle lens (such as a fisheye lens) is often used.

Examples of the related art include JP 2022-155102A (Reference 1) and Japanese Patent No. 6891954B (Reference 2).

In the related art, an image captured by a wide-angle camera (fisheye camera) used in an object position detection device tends to have a larger distortion toward a peripheral portion. Therefore, in order to accurately detect a position of an object, it is necessary to execute object detection processing after executing distortion correction on the acquired image. Therefore, the processing load of the object position detection device is large, and there is room for improvement in such an in-vehicle device with limited calculation resources.

A need thus exists for an object position detection device capable of reducing a processing load and required calculation resources while using an image captured by a wide-angle camera (fisheye camera).

SUMMARY

According to an aspect of this disclosure, there is provided an object position detection device including: an image acquisition unit configured to acquire imaging data on a wide-angle image of surrounding conditions of a vehicle cabin captured by a wide-angle camera; a region setting unit configured to set, in the wide-angle image, a region of interest surrounding a region where an object is regarded to be present; a candidate point setting unit configured to set a plurality of candidate points that are candidates for a presence position of the object on or in a vicinity of a boundary line defining the region of interest; a representative point selection unit configured to determine a reference point at a predetermined position in the region of interest, execute distortion correction on the reference point and the candidate points, and select a representative point that is regarded as a ground contact position of the object from among the candidate points after the distortion correction; a coordinate acquisition unit configured to acquire three-dimensional coordinates of the representative point; and an output unit configured to output position information on the ground contact position of the object based on the three-dimensional coordinates. According to this configuration, for example, processing such as distortion correction processing is not executed on the entire wide-angle image but only on the reference point and the candidate points (including the representative point), and thus a processing load and required calculation resources can be reduced.

The representative point selection unit of the object position detection device may set, as the representative point, the candidate point at a position closest to, for example, a normal line, the normal line being drawn downward in a vertical direction from the reference point, in a direction orthogonal to the normal line. According to this configuration, for example, the representative point can be more accurately and easily selected.

The region setting unit of the object position detection device may set, for example, the region of interest having a rectangular shape surrounding the object, and the candidate point setting unit may set the plurality of candidate points at substantially equal intervals on the boundary line of the region of interest. According to this configuration, for example, the candidate point that can serve as the representative point can be efficiently set.

The representative point selection unit of the object position detection device may, for example, regard a central position of the object to be present at a center of the region of interest, and set the reference point at the center of the region of interest. According to this configuration, for example, the reference point used for selecting the representative point can be easily and more appropriately set.

BRIEF DESCRIPTION OF THE DRAWINGS

The foregoing and additional features and characteristics of this disclosure will become more apparent from the following detailed description considered with the reference to the accompanying drawings, wherein:

FIG. 1 is an exemplary and schematic plan view showing a vehicle that can be equipped with an object position detection device according to an embodiment;

FIG. 2 is an exemplary and schematic block diagram showing a configuration of a control system including the object position detection device according to the embodiment;

FIG. 3 is an exemplary and schematic block diagram showing a configuration when the object position detection device (object position detection unit) according to the embodiment is implemented by a CPU;

FIG. 4 is an exemplary and schematic diagram showing a setting state of a region of interest in a wide-angle image used by the object position detection device according to the embodiment;

FIG. 5 is an exemplary and schematic diagram showing a state in which a reference point and candidate points are set in a region of interest used when detecting an object position by the object position detection device according to the embodiment;

FIG. 6 is an exemplary and schematic diagram showing in detail setting of the candidate points in the object position detection device according to the embodiment;

FIG. 7 is an exemplary and schematic diagram showing an image of panoramic conversion processing used when selecting a representative point in the object position detection device according to the embodiment;

FIG. 8 is an exemplary and schematic image diagram showing that the wide-angle image used by the object position detection device according to the embodiment contains a distortion in a vertical direction;

FIG. 9 is an exemplary and schematic image diagram showing a state in which the distortion in the vertical direction is removed by panoramic conversion using equirectangular projection for the wide-angle image used by the object position detection device according to the embodiment; and

FIG. 10 is an exemplary flowchart showing a flow of object position detection processing by the object position detection device according to the embodiment.

DETAILED DESCRIPTION

Hereinafter, embodiments and modifications disclosed herein will be described with reference to the drawings. Configurations of the embodiments and modifications described below, as well as operational effects brought about by the configurations, are merely examples, and are not limited to the following description.

An object position detection device according to the present embodiment acquires, for example, specific pixels used to identify a foot position of an object on a road surface (ground) in a region of interest (such as a bounding box) recognized as a region where the object is included in a captured image captured by a wide-angle camera (such as a fisheye camera). Then, processing such as distortion correction is executed on the specific pixels, whereby the foot position of the object is detected by processing with a low processing load and a low resource, and output as position information on the object.

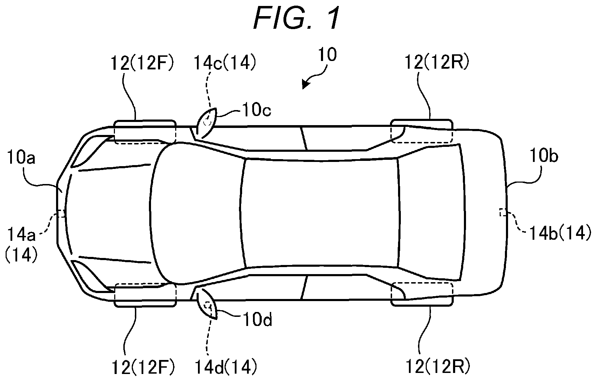

FIG. 1 is an exemplary and schematic plan view of a vehicle 10 equipped with the object position detection device according to the present embodiment. The vehicle 10 may be, for example, an automobile (an internal combustion engine automobile) using an internal combustion engine (an engine, not shown) as a drive source, an automobile (an electric automobile, a fuel cell automobile, or the like) using an electric motor (a motor, not shown) as a drive source, or an automobile (a hybrid automobile) using both of these as a drive source. The vehicle 10 can be equipped with various transmission devices, and can also be equipped with various devices (systems, components, and the like) necessary for driving the internal combustion engine and the electric motor. The system, number, layout, and the like of the devices related to driving of wheels 12 (front wheels 12F and rear wheels 12R) in the vehicle 10 can be set in various ways.

As shown in FIG. 1, the vehicle 10 includes, for example, four imaging units 14a to 14d as a plurality of imaging units 14. The imaging unit 14 is, for example, a digital camera including a built-in imaging element such as a charge coupled device (CCD) or a CMOS image sensor (CIS). The imaging unit 14 can output moving image data (captured image data) at a predetermined frame rate. Each imaging unit 14 includes a wide-angle lens (such as a fisheye lens), and can image a range of, for example, 140° to 220° in a horizontal direction. For example, an optical axis of the imaging unit 14 (14a to 14d) disposed on an outer periphery of the vehicle 10 may be set obliquely downward. Accordingly, the imaging unit 14 (14a to 14d) sequentially images the surrounding conditions outside the vehicle 10, including a road surface (ground) on which the vehicle 10 can move, marking (such as an arrow, a lot line, a parking frame indicating a parking space, or a lane separation line) attached to the road surface, or an object (an obstacle such as a pedestrian, another vehicle, or a fixed object) present on the road surface, and outputs the image as the captured image data.

The imaging unit 14a is provided, for example, on a front side of the vehicle 10, that is, at an end portion of a substantial center in a vehicle width direction on the front side in a vehicle longitudinal direction, such as at a front bumper 10a or a front grill, and can capture a front image including the front end portion (such as the front bumper 10a) of the vehicle 10. The imaging unit 14b is provided, for example, on a rear side of the vehicle 10, that is, at an end portion of a substantial center in the vehicle width direction on the rear side in the vehicle longitudinal direction, such as above a rear bumper 10b, and can image a rear region including the rear end portion (such as the rear bumper 10b) of the vehicle 10. The imaging unit 14c is provided, for example, at a right end portion of the vehicle 10, such as at a right door mirror 10c, and can capture a right side image including a region centered on a right side of the vehicle 10 (such as a region from a right front side to a right rear side). The imaging unit 14d is provided, for example, at a left end portion of the vehicle 10, such as at a left door mirror 10d, and can capture a left side image including a region centered on a left side of the vehicle 10 (such as a region from a left front side to a left rear side).

For example, by executing calculation processing and image processing on each piece of captured image data obtained by the imaging units 14a to 14d, it is possible to display an image in each direction around the vehicle 10 or execute surrounding monitoring. In addition, by executing the calculation processing and the image processing based on each piece of captured image data, it is possible to generate an image with a wider viewing angle, generate and display a virtual image (such as a bird's-eye view image (plane image), a side view image, or a front view image) of the vehicle 10 as viewed from above, a front side, a lateral side, or the like, or execute the surrounding monitoring.

As described above, the captured image data captured by each imaging unit 14 is displayed on a display device in a vehicle cabin in order to provide a user such as a driver with the surrounding conditions of the vehicle 10. The captured image data can be used to execute various types of detection such as detecting an object (obstacle such as another vehicle or a pedestrian), identifying a position, and measuring a distance, and position information on the detected object can be used to control the vehicle 10.

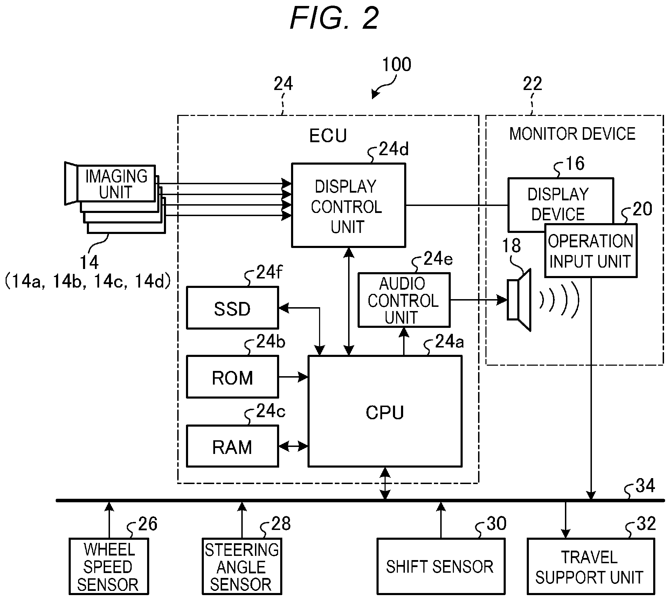

FIG. 2 is an exemplary and schematic block diagram of a configuration of a control system 100 including the object position detection device mounted on the vehicle 10. A display device 16 and an audio output device 18 are provided in the vehicle cabin of the vehicle 10. The display device 16 is, for example, a liquid crystal display (LCD) or an organic electroluminescent display (OELD). The audio output device 18 is, for example, a speaker. The display device 16 is covered with a transparent operation input unit 20 such as a touch panel. The user (such as the driver) can visually recognize an image displayed on a display screen of the display device 16 via the operation input unit 20. The user can perform operation input by touching, pressing, or moving the operation input unit 20 with a finger or the like at a position corresponding to the image displayed on the display screen of the display device 16. The display device 16, the audio output device 18, the operation input unit 20, and the like are provided, for example, in a monitor device 22 located at a central portion of a dashboard of the vehicle 10 in the vehicle width direction, that is, a left-right direction. The monitor device 22 may include an operation input unit (not shown) such as a switch, a dial, a joystick, and a push button. The monitor device 22 may also serve as, for example, a navigation system or an audio system.

As shown in FIG. 2, in addition to the imaging units 14 (14a to 14d) and the monitor device 22, the control system 100 (including the object position detection device) includes an electronic control unit (ECU) 24, a wheel speed sensor 26, a steering angle sensor 28, a shift sensor 30, a travel support unit 32, and the like. In the control system 100, the ECU 24, the monitor device 22, the wheel speed sensor 26, the steering angle sensor 28, the shift sensor 30, the travel support unit 32, and the like are electrically connected via an in-vehicle network 34 serving as an electric communication line. The in-vehicle network 34 is implemented, for example, as a controller area network (CAN). The ECU 24 can control various systems by transmitting control signals through the in-vehicle network 34. The ECU 24 can receive, via the in-vehicle network 34, operation signals from the operation input unit 20 and various switches, detection signals from various sensors such as the wheel speed sensor 26, the steering angle sensor 28, and the shift sensor 30, and the like. Various systems (steering system, brake system, drive system, and the like) for causing the vehicle 10 to travel and various sensors are connected to the in-vehicle network 34, but FIG. 2 does not show configurations that are less relevant to the object position detection device according to the present embodiment, and description thereof is omitted.

The ECU 24 is implemented by a computer or the like, and controls the entire vehicle 10 through cooperation of hardware and software. Specifically, the ECU 24 includes a central processing unit (CPU) 24a, a read only memory (ROM) 24b, a random access memory (RAM) 24c, a display control unit 24d, an audio control unit 24e, and a solid state drive (SSD) 24f.

The CPU 24a reads a program stored (installed) in a non-volatile storage device such as the ROM 24b, and executes calculation processing according to the program. For example, the CPU 24a can execute image processing on a captured image captured by the imaging unit 14, execute object position detection (recognition) to acquire three-dimensional coordinates of an object, and estimate a position of the object, a distance to the object, and a movement speed, a movement direction, and the like of the object when the object is moving. For example, information necessary for controlling and operating a steering system, a brake system, a drive system, and the like can be provided.

The ROM 24b stores programs and parameters necessary for executing the programs. The RAM 24c is used as a work area when the CPU 24a executes object position detection processing, and is used as a temporary storage area for various data (captured image data sequentially (in time-series) captured by the imaging unit 14) used in calculation by the CPU 24a. Among calculation processing executed by the ECU 24, the display control unit 24d mainly executes image processing on image data acquired from the imaging unit 14 and output to the CPU 24a, conversion of the image data acquired from the CPU 24a into display image data to be displayed by the display device 16. Among the calculation processing executed by the ECU 24, the audio control unit 24e mainly executes processing on audio that is acquired from the CPU 24a and output by the audio output device 18. The SSD 24f is a rewritable non-volatile storage unit and continuously stores data acquired from the CPU 24a even when the ECU 24 is powered off. The CPU 24a, the ROM 24b, the RAM 24c, and the like may be integrated into the same package. Instead of the CPU 24a, the ECU 24 may use another logic calculation processor such as a digital signal processor (DSP), or a logic circuit. A hard disk drive (HDD) may be provided instead of the SSD 24f, or the SSD 24f and the HDD may be provided separately from the ECU 24.

The wheel speed sensor 26 is a sensor that detects an amount of rotation of the wheel 12 and a rotation speed per unit time. The wheel speed sensor 26 is disposed on each wheel 12, and outputs a wheel speed pulse number indicating the rotation speed detected at each wheel 12 as a sensor value. The wheel speed sensor 26 may include, for example, a Hall element. The CPU 24a calculates a vehicle speed, an acceleration, and the like of the vehicle 10 based on a detection value acquired from the wheel speed sensor 26, and executes various types of control.

The steering angle sensor 28 is, for example, a sensor that detects a steering amount of a steering unit such as a steering wheel. The steering angle sensor 28 includes, for example, a Hall element. The CPU 24a acquires, from the steering angle sensor 28, the steering amount of the steering unit by the driver, a steering amount of the front wheel 12F during automatic steering when executing parking support, and the like, and executes various types of control.

The shift sensor 30 is a sensor that detects a position of a movable portion (bar, arm, button, or the like) of a transmission operation portion, and detects information indicating an operating state of a transmission, a state of a transmission stage, a travelable direction of the vehicle 10 (D range: forward direction, R range: backward direction), and the like.

The travel support unit 32 provides control information to the steering system, the brake system, the drive system, and the like in order to implement travel support for moving the vehicle 10 based on a movement route calculated by the control system 100 or a movement route provided from outside. For example, the travel support unit 32 executes fully automatic control for automatically controlling all of the steering system, the brake system, the drive system, and the like, or executes semi-automatic control for automatically controlling a part of the steering system, the brake system, the drive system, and the like. The travel support unit 32 may provide the driver with operation guidance for the steering system, the brake system, the drive system, and the like, and cause the driver to execute manual control for performing a driving operation, so that the vehicle 10 can move along the movement route. In this case, the travel support unit 32 may provide operation information to the display device 16 and the audio output device 18. When executing the semi-automatic control, the travel support unit 32 can provide, via the display device 16 and the audio output device 18, the driver with information on an operation performed by the driver, such as an accelerator operation.

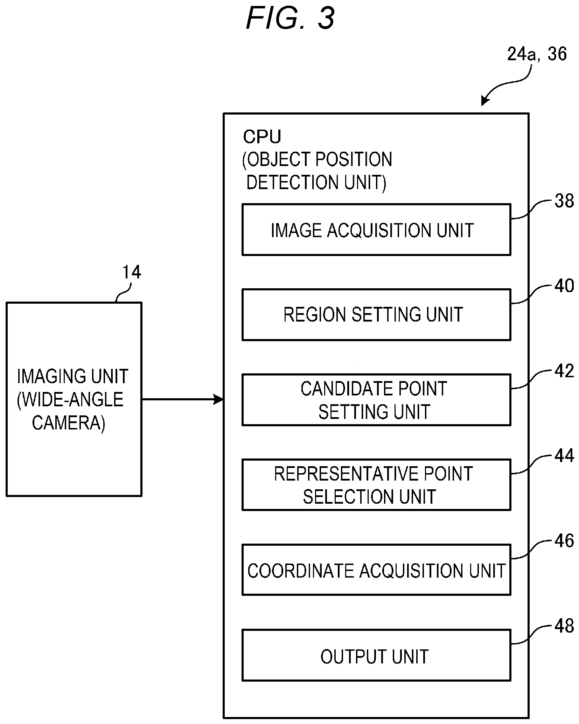

FIG. 3 is a block diagram illustratively and schematically showing a configuration when the object position detection device (an object position detection unit 36) according to the embodiment is implemented by the CPU 24a. By executing an object position detection program read from the ROM 24b, the CPU 24a implements modules such as an image acquisition unit 38, a region setting unit 40, a candidate point setting unit 42, a representative point selection unit 44, a coordinate acquisition unit 46, and an output unit 48 as shown in FIG. 3. A part or all of the image acquisition unit 38, the region setting unit 40, the candidate point setting unit 42, the representative point selection unit 44, the coordinate acquisition unit 46, and the output unit 48 may be implemented by hardware such as a circuit. Although not shown in FIG. 3, the CPU 24a can also implement various modules necessary for traveling of the vehicle 10. FIG. 2 shows the CPU 24a that mainly executes the object position detection processing, but a CPU for implementing various modules necessary for traveling of the vehicle 10 may be provided, or an ECU different from the ECU 24 may be provided.

The image acquisition unit 38 acquires a captured image (wide-angle (fisheye) image) showing the surrounding conditions of the vehicle 10, including a road surface (ground) on which the vehicle 10 is present, which is captured by the imaging unit 14 (wide-angle camera, fisheye camera, or the like), and provides the captured image to the region setting unit 40. The image acquisition unit 38 may sequentially acquire captured images captured by the imaging units 14 (14a to 14d) and provide the captured images to the region setting unit 40. In another example, the image acquisition unit 38 may selectively acquire a captured image in a travelable direction, so that object detection in the travelable direction can be executed based on information on a direction in which the vehicle 10 can travel (forward direction or backward direction), which can be acquired from the shift sensor 30, or information on a turning direction of the vehicle 10, which can be acquired from the steering angle sensor 28, and provide the captured image to the region setting unit 40.

The region setting unit 40 sets a rectangular region of interest (such as a rectangular bounding box) for selecting a predetermined target object (object such as a person or another vehicle) from objects included in the wide-angle image acquired by the image acquisition unit 38. That is, a region surrounding a region where a processing target is regarded to be present is set in the wide-angle image. The object surrounded by the region of interest is an object that may be present on a road surface (ground) around the vehicle 10, and may include a movable object such as a person or another vehicle (including a bicycle or the like), as well as a stationary object such as a fence, a utility pole, a street tree, or a flower bed. The object surrounded by the region of interest is an object that can be extracted with reference to a model trained in advance by machine learning or the like. The region setting unit 40 applies a model trained according to a well-known technique to the wide-angle image, obtains, for example, a degree of matching between a feature point of an object as the model and a feature point of an image included in the wide-angle image, and detects where a known object is present on the wide-angle image. Then, the region of interest (bounding box) having, for example, a substantially rectangular shape is set to surround the detected object.

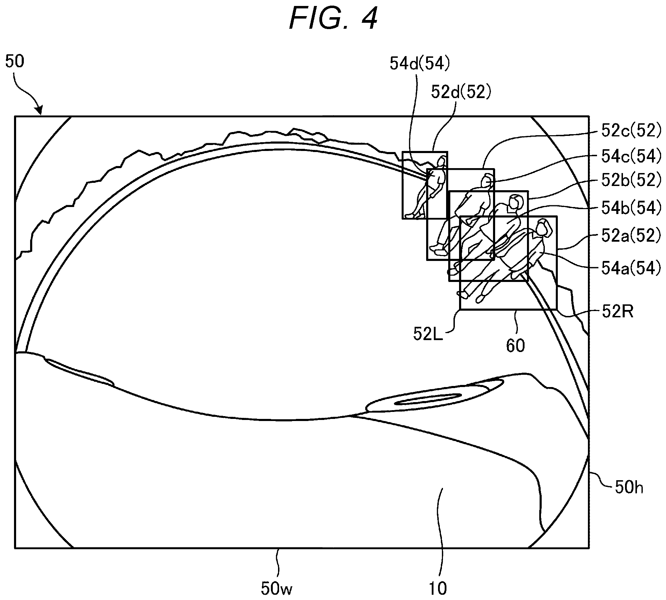

FIG. 4 is an exemplary and schematic diagram showing a setting state of a region of interest 52 (52a to 52d) in a wide-angle image 50 used by the object position detection device (object position detection unit 36). In a case of FIG. 4, four persons 54 (54a to 54d) are present on a left front side of the vehicle 10, and the region of interest 52 is set for each person. As described above, the region of interest 52 is set to surround the person 54 extracted by comparison with a model trained according to the well-known technique. Therefore, each region of interest 52 is set at a size (horizontal length $\times$ vertical length) according to a size of an object regarded as the extracted person 54 or the like. The region of interest 52 is defined by, for example, center coordinates, a horizontal length, and a vertical length (x, y, w, h) on the wide-angle image 50.

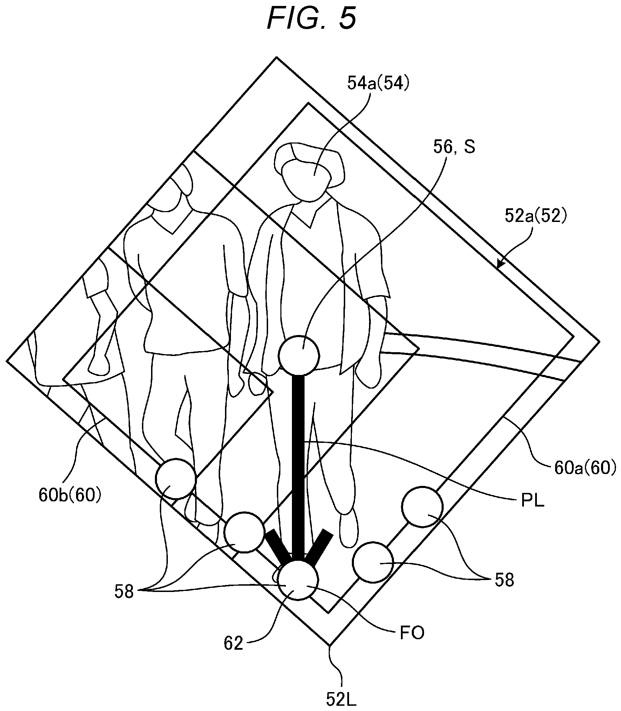

The candidate point setting unit 42 selects one of the regions of interest 52 set on the wide-angle image 50, and sets a candidate point that can indicate the foot of the person 54. FIG. 5 is an exemplary and schematic diagram showing a setting state of a reference point 56 and candidate points 58 used when detecting an object position by the object position detection unit 36 (object position detection device). The candidate point setting unit 42 sets a plurality of candidate points 58 that can serve as candidates for a presence position (such as the foot) of an object (such as the person 54) on or in the vicinity of a boundary line 60 defining the selected region of interest 52.

As described above, the region of interest 52 is a substantially rectangular region set to surround the person 54. As shown in FIG. 4, for example, four boundary lines 60 are set in the region of interest 52 to be parallel to a horizontal frame line 50w and a vertical frame line 50h of the wide-angle image 50. When the object (such as the person 54) is surrounded by the region of interest 52, the region of interest 52 is set around the object (such as the person 54). In this case, considering a case where the person 54 is present on a road surface (ground) in a standing posture, when the person 54 is present on a right side as the wide-angle image 50 is divided into left and right at a center, the foot of the person 54 is present on a boundary line 60 side constituting a left corner 52L of the region of interest 52. Conversely, when the person 54 is present on a left side of the wide-angle image 50, the foot of the person 54 is present on a boundary line 60 side constituting a right corner 52R of the region of interest 52. Therefore, when setting the candidate points 58, the candidate point setting unit 42 sets the candidate points 58 on a side where the object (such as the person 54) is present in a left region or a right region as the wide-angle image 50 is divided into left and right at the center. As a result, it is possible to efficiently limit and set a position where the foot (ground contact position) of the object (such as the person 54) may be present. For example, in the case of FIG. 4, since the object (such as the person 54) is present on the right side of the wide-angle image 50, the foot of the person 54 is present on the boundary line 60 side constituting the left corner 52L of the region of interest 52.

FIG. 5 shows the region of interest 52a in a tilted manner such that an image recognized as the person 54a included in the region of interest 52a is shown to be substantially upright. As shown in FIG. 5, the candidate point setting unit 42 sets the plurality of candidate points 58 on a boundary line 60a and a boundary line 60b defining the corner 52L. In a case of FIG. 5, in order to simplify the drawing, two candidate points 58 are shown on the boundary line 60a, and three candidate points 58 are shown on the boundary line 60b, but actually about 20 candidate points 58 can be set on each boundary line, for example.

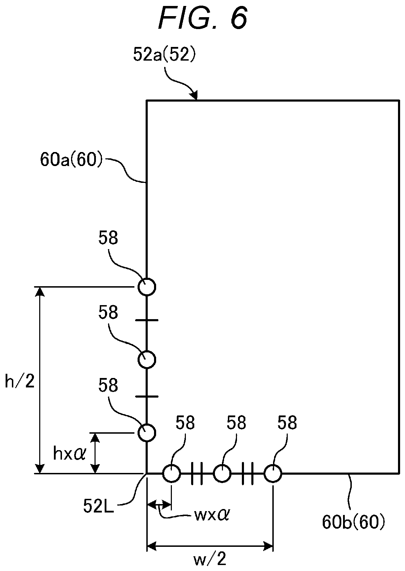

FIG. 6 is an exemplary and schematic diagram showing in detail setting of the candidate points 58. In order to simplify the drawing in FIG. 6, three candidate points 58 are shown on each of the boundary line 60a and the boundary line 60b, but actually, as described above, about 20 candidate points 58 can be set on each boundary line, for example. As shown in FIG. 6, the plurality of candidate points 58 are arranged at equal intervals on the boundary line 60 in the rectangular region of interest 52a surrounding the person 54 (not shown) that is the object. As shown in FIG. 5, since the region of interest 52a is set to surround (substantially the entire) the person 54a, the foot (ground contact position) of the person 54a is present on a corner 52L side. Therefore, in the region of interest 52a, a region where the foot of the person 54a may be present can be regarded as being closer to the corner 52L on the boundary line 60. Therefore, the candidate point setting unit 42 sets a setting range of the candidate points 58 at, for example, 1/2 of the boundary line 60 from the corner 52L. For example, in a case of the boundary line 60a, when a total length is h, the candidate points 58 are set at substantially equal intervals in a range of h/2. Similarly, in a case of the boundary line 60b, when a total length is w, the candidate points 58 are set at substantially equal intervals in a range of w/2. An interval between the candidate points 58 on the boundary line 60a and an interval between the candidate points 58 on the boundary line 60b may be the same or different. As shown in FIG. 5, the foot of the person 54a is often not necessarily at a position that coincides with the corner 52L. The position is often shifted from the corner 52L to a region inside the region of interest 52a or deviated from the boundary line 60a or the boundary line 60b. Therefore, when the candidate point 58 is set at a position of the corner 52L or a position fairly close to the corner 52L, the candidate point 58 that is not preferable may be selected when the representative point selection unit 44 selects a representative point 62 from among the candidate points 58 as described later. In order to avoid such inconvenience, the candidate point setting unit 42 provides a non-setting region for the candidate point 58. For example, a removal rate $\alpha$ that defines a region where there is a low potential that the candidate point 58 is present is determined in advance through a test or the like. That is, for example, the candidate point setting unit 42 does not set the candidate point 58 in a region defined by a boundary line length w $\times$ a removal rate $\alpha$ of a horizontal frame and a boundary line length h $\times$ a removal rate $\alpha$ of a vertical frame, of the region of interest 52. In this way, by providing the non-setting region for the candidate point 58, it is possible to prevent the inappropriate candidate point 58 from being used for the object position detection processing.

Although FIG. 6 shows an example in which the candidate points 58 are set on the boundary line 60 of the region of interest 52, the candidate point 58 may not necessarily be on the boundary line 60. For example, the candidate point 58 may be set in the vicinity of the boundary line 60 in a region inside the region of interest 52. The candidate points 58 may be set in the vicinity of the boundary line 60 in a region outside the region of interest 52.

Subsequently, the representative point selection unit 44 determines the reference point 56 at a predetermined position in the region of interest 52, executes distortion correction on the reference point 56 and the candidate points 58, and selects the representative point 62 (see FIG. 5) that can be regarded as a ground contact position (foot position) of the object (such as the person 54) from among the candidate points 58 after the distortion correction.

First, the representative point selection unit 44 determines the reference point 56 serving as a reference for object position detection (position detection of the person 54) in the region of interest 52 selected as a processing target. As shown in FIG. 5, for example, when the person 54 is in an upright posture on the road surface (ground), there is a high potential that a foot FO is present at a position where a normal PL is drawn from the abdomen to the road surface. As described above, the region of interest 52 is set to surround the entire object around the object (such as the person 54). That is, a center (such as an abdomen S) of the object (person 54) can be regarded to be present at a center of the region of interest 52. Therefore, the representative point selection unit 44 regards the center (such as the abdomen S) of the person 54 surrounded by the region of interest 52 to be present at the center (coordinates) of the region of interest 52. That is, center coordinates of the region of interest 52 are set as a position (coordinates) of the reference point 56.

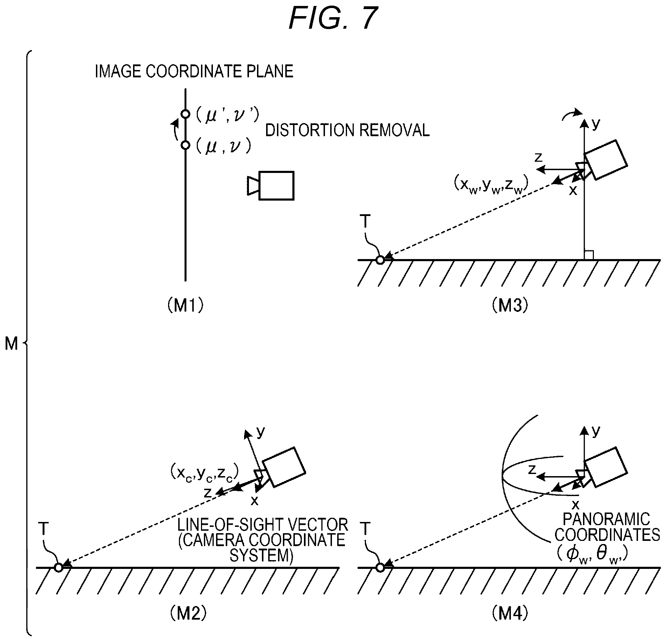

Subsequently, the representative point selection unit 44 selects the representative point 62 from among the plurality of candidate points 58 set in the region of interest 52. First, an example of panoramic conversion for coordinates of processing target points (such as the reference point 56 and the candidate points 58 including the representative point 62) by removing distortion from the wide-angle image 50 will be described with reference to FIG. 7. FIG. 7 is a diagram showing, as an example, procedures M of panoramic conversion (conversion into polar coordinates) using equirectangular projection.

First, in a procedure M1, a target point is converted from wide-angle (fisheye) image coordinates $(u, v)$ to perspective projection image coordinates $(u', v')$. That is, a distortion is removed. Subsequently, in a procedure M2, the perspective projection image coordinates $(u', v')$ are converted into a camera coordinate system $(x_c, y_c, z_c)$. A line-of-sight vector in a world coordinate system is a vector directed toward a target point T from a camera coordinate center. A diagram of the procedure M2 is an image of a camera coordinate system space.

Subsequently, in a procedure M3, the camera coordinate system $(X_c, Y_c, Z_c)$ is converted into a world coordinate system $(X_w, Y_w, Z_w)$. The line-of-sight vector in the world coordinate system is obtained by applying only a rotation matrix since a camera center is an origin. At this time point, world coordinates are horizontal to a ground plane (ground). This processing ensures linearity in a vertical direction during the panoramic conversion. Then, in a procedure M4, the world coordinate system $(x_w, y_w, z_w)$ is converted into panoramic coordinates $(\Phi_w, \theta_w)$. In this case, an azimuth angle and an elevation angle in the world coordinate system are obtained, and used as the panoramic coordinates in the equirectangular projection. $\Phi_w$ and $\theta_w$ can be obtained by the following equations.

$$\theta_w = \arcsin(y_w) \qquad \text{Formula 1}$$

$$\phi_w = -\arctan2\left(\frac{x_w}{\sqrt{x_w^2 + z_w^2}}, \frac{z_w}{\sqrt{x_w^2 + z_w^2}}\right) \qquad \text{Formula 2}$$

As described above, in a coordinate system converted into the panoramic coordinates, there is a high potential that the foot FO of the person 54 is present on the normal PL drawn from the panoramic coordinates $(\Phi_w, \theta_w)$ corresponding to the reference point 56 $(u, v)$. As shown in FIG. 5, the representative point selection unit 44 selects, as the representative point 62, the candidate point 58 having a $\Phi_w$ coordinate closest to the $\Phi_w$ coordinate in the panoramic coordinates $(\Phi_w, \theta_w)$ corresponding to the reference point 56 $(u, v)$ in the region of interest 52a (52).

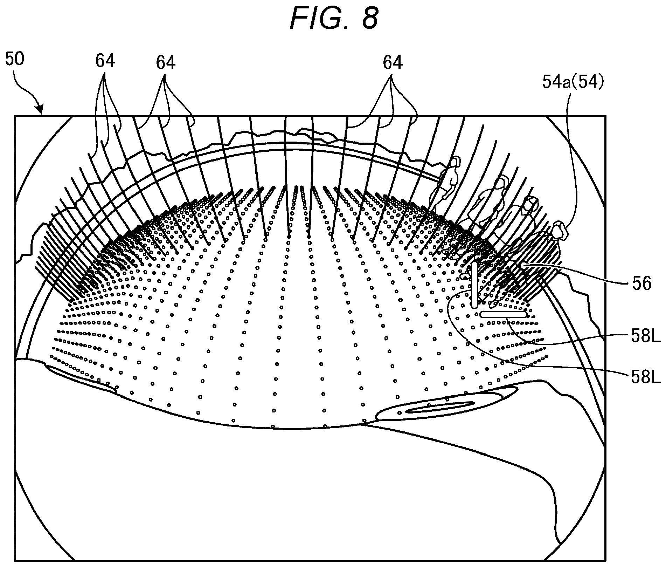

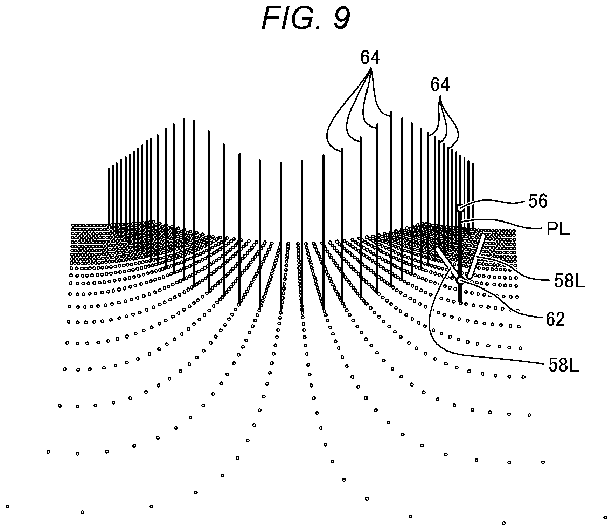

FIG. 8 is an exemplary and schematic diagram showing a distortion image of a wide-angle image showing that a distortion occurs in a radial direction of the wide-angle image 50 (fisheye image) by indicating auxiliary lines 64 in a vertical direction of the wide-angle image 50. FIG. 8 shows that the auxiliary lines 64 are more distorted toward a peripheral portion (such as in a left-right direction) of the wide-angle image 50. On the wide-angle image 50, the foot of the person 54a standing upright on the road surface is displayed as being shifted in a direction parallel to the road surface. In FIG. 8, the plurality of candidate points 58 are shown as a candidate point group 58L. On the other hand, FIG. 9 is an exemplary and schematic diagram showing an image in which the distortion in the vertical direction is removed in a process of the panoramic conversion using equirectangular projection. That is, each auxiliary line 64 is directed toward the road surface in the vertical direction. As described above, when the distortion in the vertical direction is removed, the foot FO of the person 54 should be located on or in the vicinity the normal PL drawn from the reference point 56. In other words, it can be estimated that the candidate point 58 (the candidate point 58 having the closest $\Phi_w$ coordinate) located closest to the normal line PL in a horizontal direction ($\Phi_w$ coordinate) is the foot FO (representative point 62). In FIG. 9, the plurality of candidate points 58 are shown as the candidate point group 58L.

In this way, by identifying a minimum number of pixels (such as the reference point 56 and the candidate points 58) from the wide-angle image 50 and executing the panoramic conversion including the distortion correction only on the image, it is possible to accurately acquire a position of the foot FO of the object (such as the person 54) without normalizing the wide-angle image 50 itself. That is, compared with a case where the panoramic conversion including the distortion correction is executed on the entire wide-angle image 50 (on the entire image), the foot FO of the object (the person 54), that is, the representative point 62 can be selected while contributing to reduction in a processing load and required calculation resources.

Referring back to FIG. 3, the coordinate acquisition unit 46 executes three-dimensional conversion on coordinates of the selected representative point 62 using a known conversion method to acquire three-dimensional coordinates. Then, the output unit 48 outputs the acquired three-dimensional coordinates to another control system or the like of the vehicle 10 as position information on the object (such as the person 54) that is a target of position detection. For example, in an automatic traveling system, object information for avoiding contact with an object is provided.

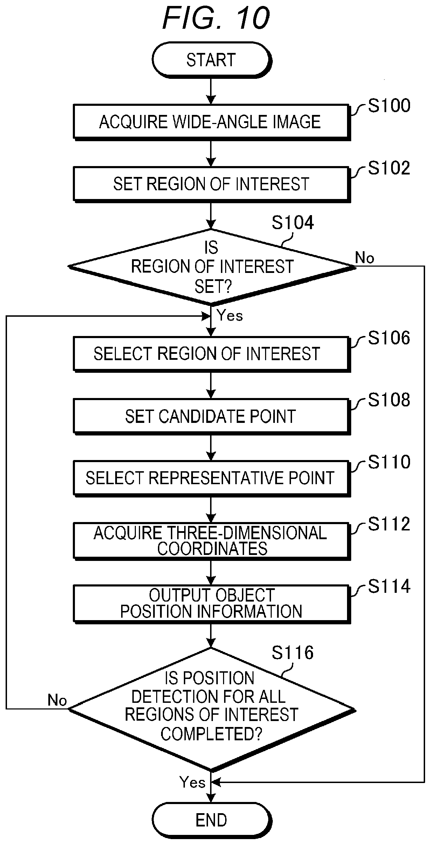

A flow of the object position detection processing by the object position detection device (object position detection unit 36) configured as described above will be described with reference to an exemplary flowchart in FIG. 10.

First, the image acquisition unit 38 acquires the wide-angle image 50 from the imaging unit 14 (wide-angle camera) (S100). For example, the image acquisition unit 38 may acquire the wide-angle image 50 including a traveling direction of the vehicle 10 based on detection results of the shift sensor 30 and the steering angle sensor 28. Subsequently, the region setting unit 40 sets the region of interest 52 (bounding box) for the acquired wide-angle image 50, to a region including an image regarded as an object (such as the person 54 or the other vehicle), to individually surround the object (S102). When the region of interest 52 is not set in the processing of S102 (No in S104), that is, when it can be determined that no object regarded as a processing target is present in the wide-angle image 50, this flow is temporarily ended.

When the region of interest 52 is set in the processing of S102 (Yes in S104), the candidate point setting unit 42 selects one of the regions of interest 52 in the wide-angle image 50 (S106). For example, when a plurality of regions of interest 52 for which the object position detection processing is not executed are present, the region of interest 52 is selected according to a predetermined priority order. For example, selection is executed in an order of proximity to the vehicle 10.

When the region of interest 52 is selected in the processing of S106, the candidate point setting unit 42 sets the plurality of candidate points 58 at positions where the foot FO of the object (such as the person 54) may be present as described with reference to FIGS. 5 and 6 (S108). Subsequently, the representative point selection unit 44 sets the reference point 56 at a predetermined position (such as a central position) in the region of interest 52 selected in S106, executes distortion correction on the reference point 56 and the candidate points 58, and selects the representative point 62 that can be regarded as a ground contact position (foot FO) of the object (such as the person 54) from among the candidate points 58 after the distortion correction (S110). At this time, as described above, the representative point selection unit 44 executes panoramic conversion including the distortion correction only on the reference point 56 and the candidate points 58 including the representative point 62. Then, the coordinate acquisition unit 46 executes three-dimensional conversion on coordinates of the selected representative point 62 using a known conversion method to acquire three-dimensional coordinates (S112). Then, the output unit 48 outputs the acquired three-dimensional coordinates to another control system or the like of the vehicle 10 as position information on the object (such as the person 54) which is a target of position detection (S114).

When output of the position information of the region of interest 52 is completed in the processing of S114 and position detection for all the regions of interest 52 set in the wide-angle image 50 being processed is completed (Yes in S116), the candidate point setting unit 42 temporarily ends this flow and waits for a timing of next object position detection processing, and the processing from S100 is to be repeated. When it is determined in the processing of S116 that the position detection for all the regions of interest 52 is not completed (No in S116), the candidate point setting unit 42 proceeds to the processing of S106, selects the region of interest 52 as a next processing target, and continues the processing of S108 and thereafter.

As described above, in the object position detection device according to the present embodiment, a minimum number of pixels (such as the reference point 56 and the candidate points 58) are identified from the wide-angle image 50, and the panoramic conversion including the distortion correction is executed only on the image. That is, by not executing calculation processing on a region not involved in the position detection, it is possible to efficiently execute the position detection on the object (person 54) while contributing to reduction in a processing load and required calculation resources.

An object position detection program for the object position detection processing implemented by the CPU 24a according to the present embodiment may be provided by being recorded in a computer-readable recording medium such as a CD-ROM, a flexible disk (FD), a CD-R, or a digital versatile disk (DVD) as a file in an installable or executable format.

Further, the object position detection program for executing the object position detection processing according to the present embodiment may be stored in a computer connected to a network such as the Internet and provided by being downloaded via the network. A posture estimation program executed in the present embodiment may be provided or distributed via a network such as the Internet.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

**Claims**

1.    An object position detection device comprising:

   an image acquisition unit (38) configured to acquire imaging data on a wide-angle image (50) of surrounding conditions of a vehicle cabin captured by a wide-angle camera;
   a region setting unit (40) configured to set, in the wide-angle image, a region of interest (52) surrounding a region where an object is regarded to be present;
   a candidate point setting unit (42) configured to set a plurality of candidate points (58) that are candidates for a presence position of the object on or in a vicinity of a boundary line (60) defining the region of interest;
   a representative point selection unit (44) configured to determine a reference point (56) at a predetermined position in the region of interest, execute distortion correction on the reference point and the candidate points, and select a representative point (62) that is regarded as a ground contact position of the object from among the candidate points after the distortion correction;
   a coordinate acquisition unit (46) configured to acquire three-dimensional coordinates of the representative point; and
   an output unit (48) configured to output position information on the ground contact position of the object based on the three-dimensional coordinates.

2.    The object position detection device according to claim 1, wherein
   the representative point selection unit sets, as the representative point, the candidate point at a position closest to a normal line (PL), the normal line being drawn downward in a vertical direction from the reference point, in a direction orthogonal to the normal line.

3.    The object position detection device according to claim 1, wherein

   the region setting unit sets the region of interest having a rectangular shape surrounding the object, and
   the candidate point setting unit sets the plurality of candidate points at substantially equal intervals on the boundary line of the region of interest.

4.    The object position detection device according to claim 1, wherein
   the representative point selection unit regards a central position of the object to be present at a center of the region of interest, and sets the reference point at the center of the region of interest.

## FIG. 1

## FIG. 2

## FIG. 3

24a, 36

**CPU
(OBJECT POSITION
 DETECTION UNIT)**

| IMAGE ACQUISITION UNIT | 38 |
|---|---|

| REGION SETTING UNIT | 40 |
|---|---|

| CANDIDATE POINT
SETTING UNIT | 42 |
|---|---|

| REPRESENTATIVE POINT
SELECTION UNIT | 44 |
|---|---|

| COORDINATE ACQUISITION UNIT | 46 |
|---|---|

| OUTPUT UNIT | 48 |
|---|---|

14

**IMAGING UNIT
(WIDE-ANGLE
CAMERA)**

## FIG. 4

## FIG. 5

# FIG. 6

# FIG. 7

IMAGE COORDINATE PLANE

$(\mu', \nu')$ DISTORTION REMOVAL
$(\mu, \nu)$

(M1)

$(x_w, y_w, z_w)$

T

(M3)

M

$(x_c, y_c, z_c)$

T

LINE-OF-SIGHT VECTOR
(CAMERA COORDINATE
SYSTEM)

(M2)

T

PANORAMIC
COORDINATES
$(\phi_w, \theta_w)$

(M4)

## FIG. 8

FIG. 9

# FIG. 10

```
                    ┌─────────────┐
                    │    START    │
                    └──────┬──────┘
                           │
              ┌────────────▼────────────┐
              │ ACQUIRE WIDE-ANGLE IMAGE │──── S100
              └────────────┬────────────┘
                           │
              ┌────────────▼────────────┐
              │   SET REGION OF INTEREST │──── S102
              └────────────┬────────────┘
                           │              S104
                    ◇──────▼──────◇
                   ╱       IS        ╲
                  ◇ REGION OF INTEREST ◇──── No ──┐
                   ╲       SET?       ╱            │
                    ◇──────┬──────◇               │
                      Yes  │                       │
           ┌───────────────▼───────────┐          │
           │  SELECT REGION OF INTEREST │──── S106 │
           └───────────────┬───────────┘          │
                           │                       │
           ┌───────────────▼───────────┐          │
           │     SET CANDIDATE POINT    │──── S108 │
           └───────────────┬───────────┘          │
                           │                       │
           ┌───────────────▼───────────┐          │
           │  SELECT REPRESENTATIVE POINT │── S110 │
           └───────────────┬───────────┘          │
                           │                       │
           ┌───────────────▼───────────┐          │
           │  ACQUIRE THREE-DIMENSIONAL │──── S112 │
           │        COORDINATES         │          │
           └───────────────┬───────────┘          │
                           │                       │
           ┌───────────────▼───────────┐          │
           │       OUTPUT OBJECT        │──── S114 │
           │    POSITION INFORMATION    │          │
           └───────────────┬───────────┘          │
                           │            S116       │
                    ◇──────▼──────◇               │
                   ╱   IS POSITION    ╲            │
          No ─────◇ DETECTION FOR ALL  ◇           │
                   ╲ REGIONS OF INTEREST╱          │
                    ◇  COMPLETED?  ◇               │
                           │                       │
                      Yes  │◄──────────────────────┘
                    ┌──────▼──────┐
                    │     END     │
                    └─────────────┘
```

**EP 4 478 298 A1**

Europäisches
Patentamt

European
Patent Office

Office européen
des brevets

# EUROPEAN SEARCH REPORT

**Application Number**

EP 24 17 6570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/319191 A1 (KANEHARA AKIRA [JP] ET AL) 6 October 2022 (2022-10-06) * paragraphs [0014] - [0030;0041]; figures 1, 3, 4 * | 1-4 | INV. G06V10/25 G06V20/58 |
| Y | US 2021/326608 A1 (YOSHIMI KOSUKE [JP]) 21 October 2021 (2021-10-21) * paragraphs [0042] - [0058]; figures 1-3 * | 1-4 | |

**TECHNICAL FIELDS SEARCHED (IPC)**

G06V

The present search report has been drawn up for all claims

| Place of search | Date of completion of the search | Examiner |
|---|---|---|
| The Hague | 21 October 2024 | Craciun, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

**ANNEX TO THE EUROPEAN SEARCH REPORT
ON EUROPEAN PATENT APPLICATION NO.**

EP 24 17 6570

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | Publication date | Patent family member(s) | | Publication date |
|---|---|---|---|---|
| US 2022319191 A1 | 06-10-2022 | CN | 115139912 A | 04-10-2022 |
| | | JP | 2022155102 A | 13-10-2022 |
| | | US | 2022319191 A1 | 06-10-2022 |
| US 2021326608 A1 | 21-10-2021 | JP | 6891954 B2 | 18-06-2021 |
| | | JP | WO2018235300 A1 | 09-04-2020 |
| | | US | 2021326608 A1 | 21-10-2021 |
| | | WO | 2018235300 A1 | 27-12-2018 |

For more details about this annex : see Official Journal of the European Patent Office, No. 12/82

**EP 4 478 298 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022155102 A

- JP 6891954 B